# FASCICULE DE BREVET EUROPEEN

(11) **EP 1 237 062 B1**
(45) Date de publication et mention de la délivrance du brevet: **05.04.2006**
(21) Numéro de dépôt: 02290088.0
(22) Date de dépôt: 14.01.2002
(51) Int. Cl.: G05D 1/00, B65G 1/137, G05D 1/03

(54) **Procédé et installation de préparation de commandes**
Bestellungsvorbereitungsverfahren und -anlage
Method and installation for order picking

(30) Priorité: 12.01.2001 FR 0100354
(43) Date de publication de la demande: 04.09.2002
(73) Titulaire: Applications de Productivité Logistique, 78620 l'Etang-la-Ville (FR)
(72) Inventeur: Ziembicki, Jury Georges, 78620 L'Etang-la-Ville (FR)
(74) Mandataire: Thibon-Littaye, Annick

(56) Documents cités:
- EP-A- 0 315 326
- WO-A-98/00819
- FR-A- 2 764 091
- US-A- 5 672 947
- PATENT ABSTRACTS OF JAPAN vol. 007, no. 179 (M-234), 9 août 1983 (1983-08-09) & JP 58 082913 A (TOYOTA JIDOSHA KOGYO KK), 18 mai 1983 (1983-05-18)

## Description

La présente invention concerne la préparation des commandes dans les entrepôts de centres de distribution ou de vente. Il s'agit de rassembler et de transporter vers un endroit prévu en sortie d'un entrepôt où ils sont stockés en vue de leur livraison, les articles commandés par des points de vente d'un réseau commercial ou par des acheteurs, en particulier dans le cas de la vente par correspondance ou du commerce électronique.

Dans les entrepôts actuels du type auquel s'intéresse l'invention, un opérateur préparateur de commandes doit rassembler, par exemple à destination d'un camion de livraison, des articles dont le nombre et la nature sont portés sur une liste de commande spécifique à la commande en cours de préparation. Il dispose à cet effet d'un engin de manutention motorisé, tel qu'un chariot électrique de transport de palettes ou autres contenants, sur lequel il rassemble les articles qu'en se référant à ladite liste, il prélève dans des emplacements de stockage respectifs dans l'entrepôt. Le trajet à travers l'entrepôt pour parcourir les emplacements de stockage peut être imposé à l'opérateur avec chaque liste, afin d'économiser son temps en établissant un ordre approprié dans la suite des emplacements à desservir auxquels il devra s'arrêter pour y prélever un ou plusieurs articles, afin aussi de coordonner au mieux les déplacements dans le même entrepôt de divers opérateurs ayant au même moment à préparer des commandes respectives répondant à des listes différentes.

Les connaissances de l'art antérieur à la présente invention dans ce domaine sont illustrées par exemple dans la demande internationale de brevet WO 98/00819, qui décrit un procédé de préparation de commandes suivant lequel on rassemble, sur un engin de manutention motorisé servant à les transporter, différents articles stockés dans un entrepôt, les articles étant prélevés d'emplacements de stockage de l'entrepôt en fonction d'une liste de commande prédéterminée et chargés sur l'engin par un opérateur préparateur de commandes.

Le document prévoit des moyens pour faciliter à l'opérateur qui conduit l'engin de manutention la connaissance à chaque étape de données essentielles relatives à l'étape suivante, telles que l'emplacement de destination ou la direction à suivre pour y parvenir, qui lui sont communiquées à partir d'un poste central de gestion de l'entrepôt, par affichage sur des écrans répartis dans l'entrepôt. Il n'en reste pas moins que suivant cet antérieur, l'opérateur se sert de l'engin motorisé qui lui est affecté pour se déplacer lui-même d'un emplacement à l'autre en transportant les articles au fur et à mesure qu'il les rassemble.

Or à l'origine de l'invention, on a observé des pertes de temps importantes qui grèvent la cadence de préparation des commandes. La présente invention vise donc à assurer une meilleure économie de temps, donc de coût, tout en préservant l'autonomie individuelle des opérateurs, avec les avantages qui en découlent Par là, elle se prête particulièrement bien aux cas d'application à la préparation de commandes pouvant impliquer un nombre limité d'articles se trouvant dans des emplacements disséminés dans un entrepôt étendu. Elle revêt également un grand intérêt pour les installations complexes où de multiples opérateurs travaillent en même temps, dans le même entrepôt, sur des commandes de compositions différentes.

Conformément à l'invention, le procédé de préparation de commandes présente les caractéristiques qui sont indiquées dans la revendication 1 et/ou celles qui sont indiquées dans la revendication 4 , avantageusement complétées chacune par les revendications qui en dépendent. L'invention s'exprime également en une installation telle que définie par la revendication 10, avantageusement complétée par les revendications 11 et/ou 12.

La présente invention permet ainsi de réduire notablement les déplacements de chaque opérateur et de simplifier les manoeuvres qu'il a à effectuer. Il en résulte une diminution de la durée de chaque préparation de commande par chaque opérateur, car celui-ci, à chaque étape de son parcours, est dispensé au moins du trajet qu'il devait auparavant parcourir à vide (sans porter un article) à l'arrivée dans l'emplacement, pour quitter son engin et aller prendre un premier article. Il en résulte aussi une diminution des risques d'accidents touchant à la santé des opérateurs ou d'incidents plus bénins mais perturbant néanmoins le fonctionnement de l'ensemble de l'installation. En particulier, les opérateurs n'ont plus à monter et descendre d'un poste de conduite pour piloter leurs engins.

En outre, alors qu'il est courant en pratique que les chariots tracteurs constituant les engins de manutention ne peuvent jamais parvenir à proximité immédiate de l'endroit où se trouvent les articles de la commande dans chaque emplacement de stockage, qu'il est courant également que de tels chariots soient guidés sur un parcours imposé, se trouvant nécessairement à l'écart des emplacements de stockage précis, la mise en oeuvre de l'invention a pour conséquence que chaque opérateur peut librement choisir son trajet, au plus court d'un emplacement à l'autre, sans avoir à se conformer au trajet de son engin de manutention. A tout le moins, on évite de ce fait l'un des trajets allant de l'engin à l'emplacement à chaque poste.

Enfin, une économie, qui pour être moindre n'est pas pour autant forcément négligeable, résulte du fait que chaque opérateur déterminé n'a plus à se rendre au poste de conduite de son chariot après avoir déposé un dernier article prélevé dans l'emplacement en cours sur une palette ou autre contenant équivalent situé en remorque du chariot. En pratique, une fois qu'un emplacement a été complètement desservi, par prélèvement de tous les articles de la commande particulière se trouvant dans cet emplacement et chargement sur l'engin, l'opérateur peut aussitôt commander le déplacement de l'engin vers l'emplacement suivant à desservir. Pendant ce déplacement de son engin, il se déplace lui-même vers cet emplacement suivant à desservir, où il se rend directement à pied pour s'y trouver prêt à charger un ou des articles à y prélever.

Il est donc avantageux, si elle n'est pas variable et librement choisie par chaque opérateur, que la vitesse des engins de manutention en circulation dans une installation suivant l'invention soit au moins égale à celle d'un homme marchant à pied. La vitesse satisfaisante peut s'apprécier par une moyenne entre deux emplacements compte tenu des temps de démarrage et de passage à l'arrêt et se déterminer pour s'adapter aux opérateurs les moins alertes.

D'une manière générale, l'invention permet de réduire notablement le temps global nécessaire à chaque opérateur pour la préparation d'une commande. La réduction peut aller jusqu'à 10 %, voire 15 % de cette durée globale, pour des entrepôts que l'on suppose construits par ailleurs suivant les règles modernes de l'ergonomie et de la logistique. Bien entendu, elle est aussi liée à d'autres facteurs, par exemple à la répartition des articles dans les différents emplacements de stockage et à la disposition de ceux-ci les uns par rapport aux autres.

Selon une autre caractéristique de l'invention, les ordres de route par lesquels l'opérateur commande les déplacements de l'engin de manutention à l'intérieur de l'entrepôt, sans monter dans le poste de conduite, sont donnés par l'opérateur et transmis à l'engin par télécommande sous forme vocale. De cette manière, l'élaboration d'un ordre de déplacement par l'opérateur préparateur de commandes est simplifiée et plus rapide. Il en résulte une nouvelle réduction de la durée totale de l'opération de préparation d'une commande. De plus, l'opérateur préparateur de commandes n'a pas de manipulation d'organes de télécommande à réaliser et il peut, par exemple, porter des gants de protection en permanence.

Selon encore une autre caractéristique de l'invention, lesdits ordres de route déterminant les déplacements de l'engin de manutention se traduisent au moins en partie par un nombre de pas élémentaires correspondant à la distance séparant l'emplacement desservi et l'emplacement suivant à desservir.

Dans certains cas de mise en oeuvre de l'invention, on ajoute à un ordre de ce genre, la possibilité d'un ordre de direction, lui aussi donné à distance par l'opérateur, par télécommande, afin d'orienter l'engin vers l'emplacement suivant.

Dans d'autres, les trajets de l'engin sont imposés, comme ce que l'on peut rencontrer quand il s'agit d'un chariot filoguidé ou autrement autoguidé suivant un circuit longeant une file d'emplacements de stockage. Le déplacement de l'engin de manutention de l'emplacement desservi à l'emplacement à desservir est alors avantageusement commandé à distance au moyen d'une seule instruction, se résumant à un ordre de mise en route (ou ordre de départ, en général vers l'avant) associé à un nombre de pas élémentaires définissant la longueur du trajet à parcourir. Dans ce cas, l'engin de manutention s'arrête automatiquement à l'emplacement suivant sans recevoir d'ordre spécifique d'arrêt.

En variante, principalement bien que non limitativement dans tous les cas où le guidage des engins de manutention dans l'entrepôt est automatisé, par exemple quand les engins de manutention sont filoguidés, l'ordre peut aussi, suivant un autre mode de mise en oeuvre avantageux de l'invention, être donné par transmission de l'adresse de l'emplacement suivant à desservir à l'engin de manutention. Cette procédure permet encore de simplifier la tâche du préparateur de commandes et d'assurer un positionnement précis de l'engin de manutention devant l'emplacement suivant à desservir.

Suivant encore une autre caractéristique de l'invention, qu'il est avantageux d'appliquer en combinaison avec une ou plusieurs des précédentes, la liste des articles est transmise sous forme vocale au préparateur de commandes. Cette transmission, qui se fait de préférence pendant le déplacement de l'engin de manutention, permet d'éviter la manipulation de listes écrites par le préparateur de commandes, la seule opération à réaliser étant le chargement des articles sur l'engin de manutention.

L'invention a également pour objet une installation de préparation de commandes comportant tous moyens utiles pour la mise en oeuvre du procédé défini ci-dessus par ses principales caractéristiques.

Sous ses formes de réalisation préférées, l'invention prévoit de munir chaque opérateur travaillant à la préparation des commandes dans l'installation d'un appareil portatif à microprocesseur servant à l'émission des ordres de route qui comporte un dispositif de reconnaissance vocale et de synthèse de la parole et qui est relié fonctionnellement à un casque support d'un ou deux écouteurs et d'un microphone également portés par l'opérateur. Elle prévoit aussi d'équiper chaque engin de manutention d'un servomécanisme, qui est opératif dans un ensemble de commande à micro-processeur de l'installation comportant un module vocal à dispositif de reconnaissance vocale pour la réception des ordres de route et opérant en liaison fonctionnelle avec un appareil portatif affecté à l'opérateur ayant à rassembler les articles d'une commande en cours de préparation sur l'engin correspondant pour interpréter les ordres reçus en commandes d'entraînement du moteur de l'engin.

En pratique, on trouve toujours plusieurs opérateurs travaillant simultanément dans l'installation avec des engins respectifs différents, et les différents appareils portatifs d'émission des ordres de route sont reliés aux engins qui leur sont respectivement associés par un réseau de communication sans fil. En pratique également, le module vocal qui assure la transformation des signaux entre les ordres sous forme vocale et la transmission aux servomécanismes est alors commun à tous les engins de manutention de l'installation, en liaison avec les appareils portatifs correspondants utilisés par les opérateurs.

Avantageusement, l'installation comporte un poste central ou autre ensemble de gestion des commandes qui est relié aux appareils portatifs des opérateurs par le réseau de communication sans fil, de manière à transmettre à chaque opérateur, également par ce réseau, notamment les références, emplacement, nombre et tout autre renseignement concernant chaque ligne d'une liste d'articles à rassembler pour une commande déterminée, et ce de préférence au fur et à mesure des déplacements de l'opérateur et de son engin le long du parcours des emplacements correspondants. On comprend que dans un tel cas, chaque opérateur peut "dialoguer", en mains libres, avec son engin de manutention et le poste central de gestion des commandes, quand celui-ci lui envoie, sous forme vocale, des indications concernant par exemple le type et le nombre d'articles à charger conformément à la liste de la commande en cours de préparation.

Selon une autre caractéristique de l'invention, chaque engin de manutention comporte un dispositif de définition de la distance à parcourir par un nombre de pas élémentaires dans une direction déterminée, ce qui peut s'exprimer alternativement par un comptage de pas élémentaires de déplacement en unités de distance, impliquant par exemple une roue codeuse une roue ou autre organe de décompte de tours ou de fractions de tour d'un arbre rotatif, ou par un système équivalent à temporisation. Un tel dispositif de comptage est exploité suivant l'invention pour commander automatiquement l'arrêt de l'engin de manutention lorsqu'il est arrivé à l'emplacement suivant à desservir, ce qui évite à l'opérateur d'avoir à surveiller l'engin en cours de déplacement pour commander son arrêt.

L'intérêt de ces dernières dispositions n'est pas limité au cas d'application de l'invention impliquant des ordres donnés par la voix. Elles sont également utiles dans bien d'autres situations, où l'on est conduit, conformément à l'invention, à équiper chaque opérateur, en association avec son engin, d'un appareil de télécommande adapté à la mise en oeuvre de l'invention, qui comporte de préférence des organes simplifiés de commande de démarrage et de la direction que prend l'engin au moins au moment du démarrage, plus éventuellement les moyens de commande d'un arrêt d'urgence. Dans tous les cas, la transmission des ordres de route entre l'opérateur préparateur de commandes et l'engin de manutention peut avantageusement être réalisée par rayonnement infrarouge ou par voie hertzienne.

L'invention sera maintenant plus complètement décrite dans le cadre de caractéristiques préférées et de leurs avantages, en faisant référence aux figures des dessins annexés qui les illustrent et dans lesquelles :
- la figure 1 illustre les déplacements réalisés par l'opérateur préparateur de commandes dans la procédure connue de préparation de commandes dans une installation suivant l'art antérieur à la présente invention ;
- la figure 2 illustre les déplacements de l'opérateur dans le cas du procédé selon l'invention ;
- la figure 3 est une représentation schématique d'une installation suivant l'invention pour la mise en oeuvre d'un tel procédé.

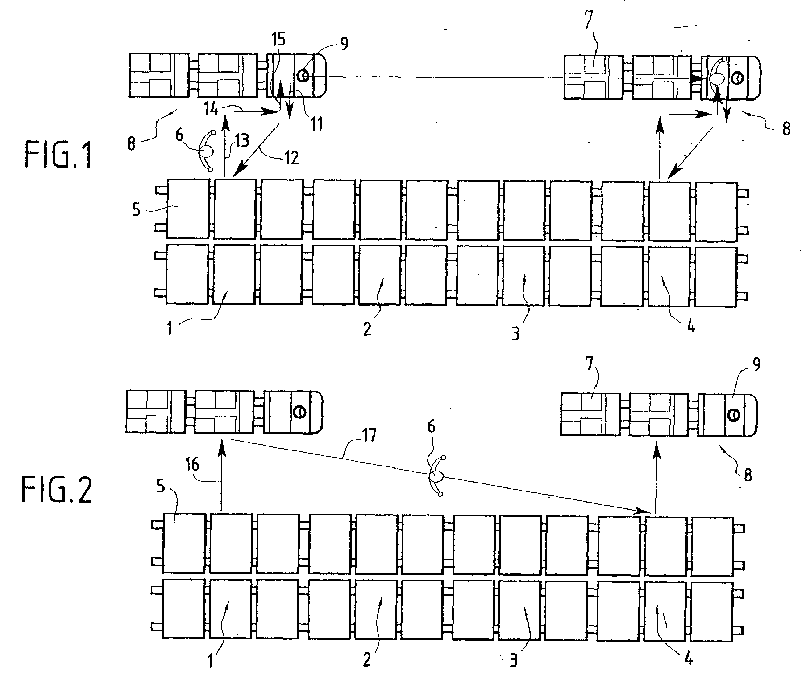

On voit sur la figure 1 une partie d'un entrepôt qui comporte des emplacements de stockage 1 à 4 qui sont ici supposés alignés. Chaque emplacement 1 à 4 comporte des palettes 5 sur lesquelles sont stockés des articles ou produits à distribuer.

Ces articles sont prélevés des emplacements de stockage respectifs en fonction d'une liste de commande qui indique la nature et le nombre des articles à rassembler pour chaque commande particulière. A chacun des emplacements de stockage qui constitue un emplacement à desservir, au motif qu'il contient les articles répondant aux références d'au moins un article de ladite liste, le ou les articles correspondants sont manipulés par un opérateur préparateur de commandes 6. Cet opérateur les prélève de l'emplacement et les porte dans un contenant, par exemple en les chargeant sur une palette 7 remorquée par un engin de manutention motorisé 8, tel qu'un chariot à moteur électrique muni de fourches adaptées au transport de palettes et guidés parallèlement à la rangée des emplacements alignés. Les différents articles de la liste de commande sont ainsi rassemblés à partir d'emplacements successivement desservis.

Le déplacement de l'engin de manutention 8 entre deux emplacements, par exemple entre un emplacement 1 déjà desservi et un emplacement suivant 4 à desservir est assuré par l'opérateur préparateur de commandes 6. Quand celui-ci ne dispose pas des moyens de l'invention, il monte sur l'engin de manutention 8 et se met au poste de conduite 9 pour commander le déplacement de l'engin de manutention 8 jusqu'au nouvel emplacement où il lui faut prélever d'autres articles pour la même commande. Ses différents déplacements à cette fin sont schématisés par des flèches sur la figure 1. Quand l'opérateur 6 arrive à l'emplacement de stockage 1, il descend du poste de conduite de l'engin 8 (flèche 11), il va jusqu'à l'emplacement de stockage (flèche 12), il prélève un ou plusieurs articles et les ramène jusqu'à la palette 7 remorquée par l'engin pour les y déposer (flèche 13). Ensuite, l'opérateur 6 se déplace vers le poste de conduite 9 (flèche 14) et il remonte sur l'engin (flèche 15). Il conduit alors ce dernier jusqu'au prochain emplacement à desservir, par exemple l'emplacement 4, où les mêmes mouvements se reproduisent pour le chargement des articles stockés dans cet emplacement 4.

Conformément à la présente invention, comme cela est illustré sur la figure 2, l'opérateur 6 ne conduit pas lui-même l'engin de manutention 8, mais il commande ses déplacements à distance en lui adressant des ordres de route qu'il émet au moyen d'un système de télécommande avec transmission sans fil. Ainsi, lorsque l'opération de chargement à partir d'un emplacement donné 1 est terminée, l'opérateur 6 n'a plus à monter sur l'engin de manutention 8. Il le commande par le réseau de transmission sans fil, et dans le même temps, il se déplace à destination du même nouvel emplacement à desservir 4, mais à pied (flèche 17). De plus, quand il quitte l'emplacement déjà desservi 1, il part de la position dans laquelle il a déposé le dernier article à charger de cet emplacement, et c'est pour aller directement à l'emplacement suivant à desservir et y parvenir dans la position adaptée prêt pour y prélever un premier article de la commande stocké dans cet emplacement (flèche 16 pour l'emplacement de stockage 1). Ce déplacement est illustré comme étant unique en considérant que l'opérateur n'a besoin que d'un voyage entre l'emplacement et l'engin pour transporter les articles qui relèvent de cet emplacement sur la liste de commande à satisfaire, mais il est clair que la comparaison avec la figure 1 resterait valable dans le cas contraire, si le nombre et la nature des articles exigent plusieurs allers et retours entre emplacement et engin de manutention.

Dans une installation complète suivant l'invention, on trouve en général plusieurs opérateurs ayant à préparer des commandes différentes, en parcourant l'un après l'autre les mêmes rangées d'emplacements, chacun avec un engin de manutention qui lui est affecté.

Suivant un mode de réalisation d'une telle installation, qui ne fait pas intervenir de commande par la parole et ne demande donc pas de dispositif de reconnaissance vocale, chacun des opérateurs porte sur lui, attaché à ses vêtements, par exemple à la ceinture ou en baudrier, un appareil de télécommande à transmission de signaux par voie hertzienne ou infrarouge qui lui permet d'envoyer les ordres de route spécifiquement à son engin et qui est avantageusement réalisé sous la forme d'une poignée à organes tels que des boutons poussoirs pour lancer les différents ordres par action mécanique manuelle de l'opérateur. Suivant une forme de réalisation préférée, cet appareil est conçu d'une part pour fonctionner en sécurité négative à l'égard des ordres de déplacement de l'engin, c'est-à-dire que chaque organe revient en position de repos dès lors qu'il n'est plus actionné par l'opérateur, d'autre part pour que lesdits organes soient protégés derrière la poignée de manière à ne pas se déclencher intempestivement en cas de choc ou de chute par exemple.

De manière plus précise, l'appareil de télécommande peut notamment comporter, sous une poignée protectrice que l'opérateur prend dans le creux de la paume de main, deux manettes symétriques à actionner par les doigts en fermant la main dessus. Chaque manette est poussée de cette manière à l'encontre d'un ressort qui tend à la rappeler élastiquement dans sa position de repos initiale, où elle est inactive. L'une est utilisée pour émettre un ordre d'avance, conduisant par exemple, à commander, par l'alimentation de son moteur, alternativement la mise en marche et l'arrêt de l'engin. L'autre sert symétriquement à faire reculer l'engin. En variante, cette seconde manette peut être conçue pour déterminer un arrêt par effet de frein et/ou verrouillage des commandes en position inactive. Et même dans ce cas, la commande lançant un ordre d'avance est éventuellement doublée d'une commande lançant un ordre de recul. Par ailleurs, la poignée sert elle-même de bouton de manoeuvre à distance en orientation. On prévoit pour cela de la monter rotative sur le boîtier de l'appareil de telle manière que sa rotation vers la droite ou vers la gauche commande un changement de direction correspondant de l'engin.

Suivant une forme de réalisation préférée d'un tel appareil portatif de télécommande équipant chaque opérateur de l'installation suivant l'invention, la même sécurité dite négative est assurée pour l'organe commandant les changements de direction de l'engin et pour la ou les manettes de commande d'entraînement. On entend par là qu'une action manuelle doit être exercée en permanence sur l'organe de commande, faute de quoi celui-ci devient inactif et cesse de transmettre l'ordre déclenché. C'est ainsi que sur un tel appareil, on prévoit avantageusement que la poignée constituant bouton de manoeuvre à distance de l'engin en orientation demande à être extraite du boîtier de l'appareil par une action spécifique de l'opérateur pour que celui-ci puisse l'actionner en rotation. Quand l'opérateur tire sur la poignée, à l'encontre de moyens ressorts qui tendent à la rappeler élastiquement dans sa position inactive où elle est fixe en rotation dans le boîtier, cela lui donne aussi accès aux manett'es de commande d'entraînement en sens d'avance et de recul. L'engin revient à l'arrêt dès lors que la pression sur ces manettes est relâchée. L'organe qui commande le déclenchement d'une procédure d'arrêt d'urgence est constitué par la poignée elle-même. Soit de la volonté de l'opérateur, soit en cas de chute ou autre choc, la pression exercée sur la poignée déclenche son déplacement dans une position enfoncée dans le boîtier qui détermine le verrouillage de l'appareil et toutes les commandes deviennent inactives. Pour faire sortir la poignée de cette position de verrouillage et la ramener en position de repos initiale, l'opérateur doit appliquer une procédure spéciale, impliquant l'exercice d'un effort relativement important ou, par exemple, celui d'une pression ou traction doublée d'une rotation.

Dans d'autres variantes de mise en oeuvre de l'invention, on peut utiliser un boîtier de télécommande plus classique, comportant des touches de commande d'avance, d'arrêt et/ou de recul, des touches directionnelles et des touches d'un clavier numérique ou alphanumérique, ce dernier pouvant servir, suivant les cas, à entrer une distance à parcourir par l'engin suite à un ordre de mise en route, par exemple par l'indication d'un nombre de pas de déplacement élémentaire, ou à entrer un code d'adresse caractéristique de l'emplacement suivant à desservir auquel l'engin doit se rendre.

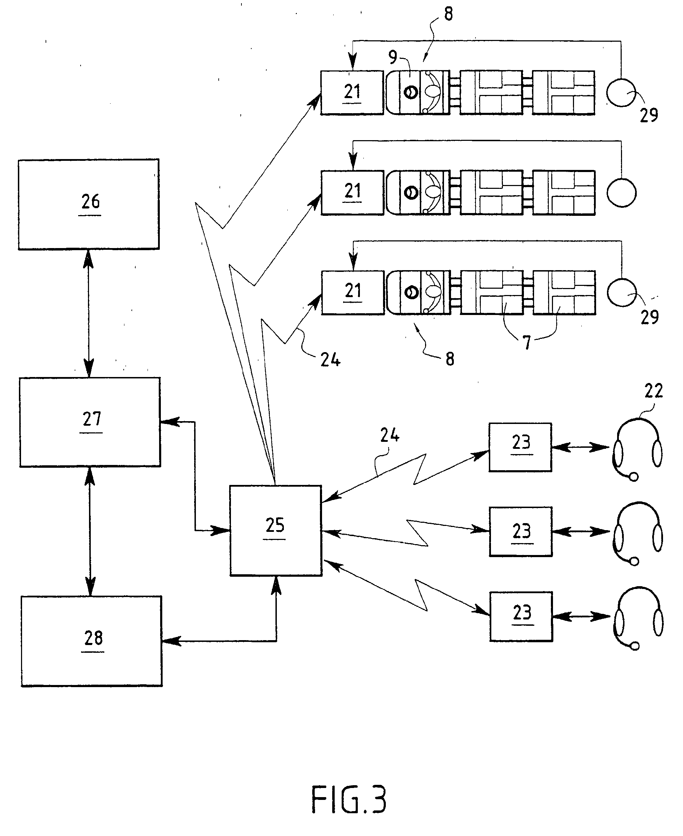

La figure 3 illustre la conception d'une installation suivant l'invention pour la mise en oeuvre du procédé qui vient d'être décrit en se plaçant dans un mode de réalisation particulièrement élaboré où les informations et instructions reçues ou émises par l'opérateur sont sous forme de paroles verbales, donc plus généralement sous forme vocale.

On retrouve sur ce schéma des engins de manutention 8 servant à rassembler et transporter les différents articles de chaque commande sur leurs palettes respectives 7. Au poste de conduite 9 de chacun il est associé un servomécanisme 21 qui détermine son déplacement. Les opérateurs ayant en charge les différents engins portent chacun un casque 22 d'émission et réception sonore, comportant un microphone et au moins un écouteur si ce n'est deux. En outre, ils portent, par exemple attaché à leur ceinture, un appareil à micro-processeur portatif, donc en pratique un micro-ordinateur 23, qui comporte un dispositif de synthèse et de reconnaissance vocale, ou mieux de la parole. Le propre d'un tel dispositif, de manière en soi connue, est de transformer des données de fichiers informatiques en des sons compréhensibles par l'opérateur qui les entend et, à l'inverse, de décoder les réponses vocales ou verbales de l'opérateur pour les transcrire en des données numériques pouvant être acquises et traitées par le système informatique. On a fait schématiquement apparaître sur la figure que sur chaque opérateur, ce dispositif 23 est relié fonctionnellement au casque 22, plus exactement à son ou ses écouteurs en réception à l'audition et à son microphone en émission par la voix ou la parole.

La transmission des données en provenance ou à destination des micro-ordinateurs portatifs 23 ou des servomécanismes 21 a lieu par la voie d'un réseau de transmission de signaux sans fil 24, opérant par exemple par voie hertzienne, et en passant par l'intermédiaire d'un module vocal 25 que sans y voir le moindre caractère limitatif, on a illustré ici comme étant intégré dans un poste central fixe de l'entrepôt. Ce module vocal est essentiellement constitué par les circuits d'un dispositif de reconnaissance des sons audibles ou de la parole servant à la transformation des ordres de route émis par un opérateur à destination de son engin. Il est toutefois avantageux qu'il fasse également office de synthétiseur vocal capable d'émettre des informations à entendre par l'opérateur, par exemple pour lui faire connaître en paroles l'étape suivante de sa liste de commande.

Un poste central 26 de gestion d'entrepôt, qui comprend en particulier un logiciel de gestion d'ensemble de l'entrepôt et un logiciel de gestion des commandes, est relié en transmission de signaux de données à un module d'interface 27 qui est relié au module vocal 25. Enfin, un module de gestion d'adresses 28 est relié d'une part au module d'interface 27 et, d'autre part, au module vocal 25. Naturellement, la gestion automatisée de l'installation peut être assurée par un ensemble de matériels et logiciels diversement répartis dans l'entrepôt plutôt que par ce que l'on a considéré ici comme étant un poste central unique.

L'installation ainsi constituée permet un traitement automatique complet de la préparation des commandes. Le poste central de gestion 26 comporte un logiciel de gestion des commandes qui élabore sous forme de signaux numériques des instructions correspondant à chaque liste de commande (nature et nombre d'articles) et les envoie, par l'intermédiaire du module d'interface 27, au module vocal 25. Ce dernier transforme ces instructions reçues sous forme numérique en instructions vocales qu'il émet sous forme de signaux audio exprimant des paroles verbales (par exemple "prendre trois articles référence X"), qui sont envoyées dans le casque de l'opérateur concerné.

L'opérateur effectue l'opération demandée, puis en parlant dans son microphone, donc également sous forme vocale, il envoie sur le réseau une information indiquant que l'opération demandée a été effectuée. Cette information est transmise au logiciel de gestion des commandes du poste central 26, qui fournit une information indiquant alors les références du prochain emplacement à desservir, avec le nombre d'articles à y prélever. Cette information est transmise au module vocal 25, qui l'envoie sous forme vocale à l'opérateur préparateur de commandes concerné, lequel émet alors en paroles un ordre de route s'exprimant sous forme vocale en un nombre réduit de termes représentatifs d'instructions codées de déplacement. Cette information est transmise par l'appareil portatif 23 et le module vocal 25 au servomécanisme 21, qui décode l'ordre et le fait exécuter par l'engin de manutention 8 correspondant à l'opérateur préparateur de commandes concerné.

Les ordres de route envoyés verbalement par chaque opérateur préparateur de commandes 6 sont sous forme de termes codifiés d'une manière déterminée pour qu'ils soient peu nombreux. Ils sont par exemple au nombre de cinq instructions, à savoir; "avant", "arrière", "droite", "gauche" et "arrêt". Ce dernier ordre est envoyé lorsque l'engin de manutention 8 se trouve au niveau du prochain emplacement à desservir.

Pour simplifier la manoeuvre, et éviter à l'opérateur 6 d'avoir à émettre un ordre d'arrêt spécifique à l'arrivée de l'engin au prochain emplacement à desservir, l'ordre de route peut comporter une instruction de départ mettant en route le moteur de l'engin et un nombre de pas élémentaires à parcourir dans une direction prédéterminée jusqu'à ce que l'arrêt de l'engin se produise automatiquement. A cet effet, chaque engin de manutention 8 peut notamment comporter un dispositif de comptage des pas élémentaires, constitué par exemple par une roue 29 (figure 3) qui fonctionne en décomptage de tours ou de fractions de tour en correspondance avec la longueur des pas et qui commande l'arrêt de l'engin de manutention 8 lorsque le nombre de pas élémentaires ordonné a été atteint.

Suivant une variante de mise en oeuvre de l'invention, qui se révélera souvent plus avantageuse, un ordre similaire peut se traduire par une temporisation commandant l'arrêt de l'engin après un temps de motorisation déterminé qui est réglable suivant la longueur du trajet à parcourir. Cette longueur de trajet est par exemple celle que l'opérateur sait apprécier visuellement, sans avoir besoin d'un instrument de mesure. Il peut aussi s'agir d'une distance qui aura été enregistrée parmi des paramètres de base de l'installation échappant aux prérogatives de l'opérateur.

Selon un autre mode de réalisation de l'invention, s'appliquant notamment quand les engins de manutention 8 sont guidés de manière automatique dans l'entrepôt, par exemple au moyen d'une installation de guidage par fil aérien ou au sol, l'ordre de route émis par l'opérateur préparateur de commandes 6 à destination de son engin de manutention ne comporte qu'une seule instruction, se traduisant en paroles avantageusement par un terme simple, tel un nombre ou une liste de chiffres, à savoir notamment une adresse caractéristique du nouvel emplacement à desservir. Dans ce cas, sur l'ordre ainsi donné par l'opérateur quand il a terminé le chargement à partir d'un emplacement dit déjà desservi, le système de guidage automatique amène son engin de manutention à l''emplacement suivant à desservir sans autre intervention.

Dans l'installation illustrée par la figure 3, il est prévu que l'adresse du nouvel emplacement à desservir soit fournie par le module de gestion d'adresses 28, qui la détermine à partir d'informations qu'il reçoit du poste central 26. Les signaux exprimant cette adresse sous forme numérique sont envoyés au module vocal 25 qui les transforme pour la traduire sous forme vocale et l'émettre spécifiquement à destination de l'opérateur concerné, lequel la reçoit par son appareil portatif 23 et l'entend par les écouteurs de son casque 22. C'est ensuite cet opérateur qui détermine les instructions ou ordres de route qu'il envoie à son engin, notamment en actionnant les organes de commande qui sont mis à sa disposition à cet effet à un moment librement choisi par lui.

Par la description détaillée qui vient d'être exposée, on voit que l'invention permet de réduire très notablement la durée totale de préparation d'une commande, dès lors que l'opérateur préparateur de commandes dispose de moyens lui permettant de commander à distance les déplacements de l'engin qui lui est affecté où il rassemble tous les articles de la commande. En outre, dans le cas où les informations correspondant aux articles à charger lui parviennent sous forme vocale, il n'a plus à consulter une liste de commande sur une feuille ou un écran. Il peut donc consacrer toute son attention à la sélection et au chargement des articles avec un risque d'erreur très faible. Quand lui-même émet les ordres à destination de son engin sous forme vocale, il peut travailler en permanence avec des gants de protection lui servant à manipuler ces articles pour les faire passer de l'emplacement de stockage duquel il les prélève au contenant de l'engin dans lequel il les dépose.

## Revendications

1. Procédé de préparation de commandes composées d'articles à prélever à partir d'emplacements de stockage dans un entrepôt par un opérateur préparateur de commandes qui les rassemble dans un contenant entraîné par un engin de manutention motorisé (8) servant à leur transport entre des emplacements successivement desservis, **caractérisé en ce que** les articles à rassembler composant une commande en cours de préparation sont sélectionnés par ledit opérateur en fonction d'une liste prédéterminée qui est transmise sous forme vocale à l'opérateur, pour chaque emplacement suivant à desservir, depuis un poste central de gestion des commandes dans l'entrepôt, et **en ce que** les déplacements de l'engin de manutention (1, 4) sont commandés par des ordres de route au moins en partie librement déterminés par l'opérateur préparateur de commandes (6), qui sont émis d'un appareil portatif propre audit opérateur et qui sont transmis à l'engin de manutention (8) par l'intermédiaire d'un réseau de télécommunication sans fil cependant que l'opérateur se déplace à pied de chaque emplacement déjà desservi à l'emplacement suivant à desservir.

2. Procédé suivant la revendication 1, **caractérisé en ce que** la transmission sous forme vocale de la liste d'articles à l'opérateur s'effectue pendant le déplacement de l'engin de manutention de l'emplacement déjà desservi à l'emplacement suivant à desservir.

3. Procédé selon la revendication 1 ou 2, **caractérisé en ce que** les ordres de route sont émis par l'opérateur (6) sous forme vocale, et transmis transformés en signaux numériques de commande pour être reçus et interprétés par l'engin de manutention (8), la transmission ayant avantageusement lieu par voie hertzienne ou par rayonnement infrarouge.

4. Procédé de préparation de commandes composées d'articles à prélever à partir d'emplacements de stockage dans un entrepôt par un opérateur préparateur de commandes qui les rassemble dans un contenant entraîné par un engin de manutention motorisé (8) servant à leur transport entre des emplacements successivement desservis, **caractérisé en ce que** les déplacements de l'engin de manutention (1, 4) sont commandés par des ordres de route au moins en partie librement déterminés par l'opérateur préparateur de commandes (6), qui sont émis par ledit opérateur sous forme vocale et qui sont transformés en signaux numériques de commande pour être reçus et interprétés par l'engin de manutention (8,) et transmis depuis un appareil portatif propre audit opérateur à l'engin de manutention (8) par l'intermédiaire d'un réseau de télécommunication sans fil cependant que l'opérateur se déplace à pied de chaque emplacement déjà desservi à l'emplacement suivant à desservir.

5. Procédé selon la revendication 4, **caractérisé en ce que** les ordres de route sont émis par l'opérateur (6) sous forme verbale.

6. Procédé selon la revendication 5, **caractérisé en ce que** lesdits articles à rassembler composant une commande en cours de préparation sont sélectionnés par ledit opérateur en fonction d'une liste prédéterminée, qui est transmise sous forme vocale à l'opérateur, pour chaque emplacement suivant à desservir, depuis un poste central ou un ensemble équivalent de gestion des commandes dans l'entrepôt, de préférence pendant que l'opérateur se déplace à pied de l'emplacement déjà desservi à l'emplacement suivant à desservir.

7. Procédé selon l'une quelconque des revendications précédentes, **caractérisé en ce que** lesdits ordres de route comportent une commande de démarrage de l'engin pour un déplacement d'un nombre de pas élémentaires déterminé, correspondant à la distance séparant un emplacement déjà desservi (1) d'un emplacement suivant à desservir (4), caractérisé aussi **en ce que** l'opérateur préparateur de commandes détermine également un ordre de direction à donner audit engin au démarrage.

8. Procédé suivant l'une quelconque des revendications précédentes, **caractérisé en ce que** lesdits ordres de route comportent la désignation de l'adresse de l'emplacement suivant à desservir (4).

9. Procédé selon l'une quelconque des revendications précédentes, **caractérisé en ce que** dans un entrepôt où circulent différents engins de manutention chacun pris en charge par un opérateur différent, la vitesse de déplacement desdits engins d'un emplacement de stockage à un autre est réglée pour être au moins équivalente à celle d'un homme marchant à pied.

10. Installation de préparation de commandes dans un entrepôt où les articles de chaque commande en cours de préparation sont prélevés par un opérateur en charge de ladite commande dans des emplacements respectifs de l'entrepôt (1-4) et rassemblés dans un contenant véhiculé par un engin de manutention motorisé lui servant à leur transport à travers l'entrepôt, et dans laquelle chaque opérateur préparateur de commandes dispose d'un appareil portatif à microprocesseur (23) qui lui est propre, en liaison avec un réseau de télécommunication sans fil, **caractérisée en ce que** l'appareil portatif (23) de chaque opérateur est associé à un servomécanisme (21) équipant l'engin de manutention affecté audit opérateur, lui permettant, au départ de chaque emplacement desservi, d'adresser à son engin des ordres de route qu'il détermine au moins en partie librement et dont il commande l'émission par ledit appareil portatif pour les transmettre par l'intermédiaire dudit réseau de télécommunication sans fil audit engin afin de commander le déplacement de celui-ci jusqu'à l'emplacement suivant à desservir, ledit servomécanisme étant capable d'interpréter lesdits ordres qu'il reçoit, et **en ce qu'**elle comporte un poste central de gestion des commandes (26) qui est également relié fonctionnellement aux appareils portatifs (23) par ledit réseau de communication sans fil (24), ainsi qu'un dispositif de synthèse et reconnaissance vocale pour la réception sous forme verbale par chaque opérateur d'informations de liste de commande pour chaque emplacement à desservir et/ou l'émission sous forme verbale desdits ordres de route.

11. Installation suivant la revendication 10, **caractérisée en ce que** chaque appareil portatif d'opérateur comporte, sous une poignée protectrice que l'opérateur prend dans le creux de la paume de main, deux manettes symétriques à actionner par les doigts en fermant la main dessus pour pousser chaque manette à l'encontre d'un ressort de rappel, l'une pour lancer un ordre de démarrage conduisant à commander la mise en marche ou l'arrêt de l'engin, l'autre pour déterminer un arrêt par effet de frein et/ou verrouillage des commandes en position inactive, la poignée servant elle-même de bouton de manoeuvre à distance en orientation, ladite poignée étant montée rotative sur le boîtier de l'appareil de telle manière que sa rotation vers la droite ou vers la gauche commande un changement d'orientation correspondant de l'engin.

12. Installation suivant la revendication 11, **caractérisée en ce que** ladite poignée constitue le bouton de manoeuvre en orientation et **en ce qu'**elle détermine le déclenchement d'une procédure d'arrêt d'urgence dans une position de verrouillage des commandes où elle est enfoncée dans ledit boîtier.

13. Installation selon la revendication 10, 11 ou 12, **caractérisée en ce qu'**il est prévu pour chaque engin de manutention (8) un dispositif de comptage de pas élémentaires de déplacement (29), tel qu'une roue codeuse ou un dispositif à temporisation équivalent, ledit dispositif de comptage étant placé sous la commande de l'appareil portatif de l'opérateur correspondant.

## Patentansprüche

1. Verfahren zur Vorbereitung von Bestellungen, die aus Artikeln bestehen, die von einem Bediener und Kommissionierer aus Lagerplätzen in einem Warenlager entnommen werden, der sie in einem durch eine motorisierte Transporteinrichtung (8) angetriebenen Behälter zusammenstellt, der für deren Transport zwischen aufeinander folgend bedienten Orten dient, **dadurch gekennzeichnet, dass** die zu zusammenzustellenden Artikel, die eine in Vorbereitung befindliche Bestellung umfassen, von dem Bediener entsprechend einer vorgegebenen Liste ausgewählt werden, die dem Bediener in vokaler Form für jeden folgenden, zu bedienenden Ort von einer zentralen Stelle zur Verwaltung der Bestellungen in dem Warenlager übermittelt wird, und dadurch, dass die Fortbewegung der Transporteinrichtung (1, 4) durch zumindest zum Teil frei vom Bediener und Kommissionierer (6) bestimmte Fahrbefehle gesteuert wird, die von einem dem Bediener zugehörigen tragbaren Gerät gesendet und mittels eines drahtlosen Telekommunikationsnetzes an die Transporteinrichtung (8) übertragen werden, während sich der Bediener zu Fuß jeweils von einem bereits bedienten Ort zum folgenden zu bedienenden Ort begibt.

2. Verfahren nach Anspruch 1, **dadurch gekennzeichnet, dass** die Übermittlung der Artikelliste in vokaler Form an den Bediener während der Fortbewegung der Transporteinrichtung von dem bereits bedienten Ort zum folgenden zu bedienenden Ort durchgeführt wird.

3. Verfahren gemäß Anspruch 1 oder 2, **dadurch gekennzeichnet, dass** die Fahrbefehle von dem Bediener (6) in vokaler Form gesendet und in digitale Steuersignale umgewandelt übertragen werden, um von der Transporteinrichtung (8) empfangen und interpretiert zu werden, wobei die Übertragung vorteilhaft mittels Radiowellen oder über Infrarotstrahlung ausgeführt wird.

4. Verfahren zur Vorbereitung von Bestellungen, die aus Artikeln bestehen, die von einem Bediener und Kommissionierer aus Lagerplätzen in einem Warenlager entnommen werden, welcher sie in einem durch eine motorisierte Transporteinrichtung (8) angetriebenen Behälter zusammenstellt, der für ihren Transport zwischen aufeinander folgend bedienten Plätzen dient, **dadurch gekennzeichnet, dass** die Fortbewegung der Transporteinrichtung (1, 4) durch zumindest zum Teil frei vom Bediener und Kommissionierer (6) bestimmte Fahrbefehle gesteuert wird, die von dem Bediener in vokaler Form gesendet und in digitale Steuersignale umgewandelt werden, um von der Transporteinrichtung (8) empfangen und interpretiert zu werden, und von einem dem Bediener zugehörigen tragbaren Gerät mittels eines drahtlosen Fernmeldenetzes an die Transporteinrichtung (8) übertragen werden, während sich der Bediener zu Fuß jeweils von einem bereits bedienten Ort zum folgenden zu bedienenden Ort begibt.

5. Verfahren gemäß Anspruch 4, **dadurch gekennzeichnet, dass** die Fahrbefehle von dem Bediener (6) in verbaler Form gesendet werden.

6. Verfahren gemäß Anspruch 5, **dadurch gekennzeichnet, dass** die zusammenzustellenden Artikel, die eine in Vorbereitung befindliche Bestellung umfassen, von dem Bediener entsprechend einer vorgegebenen Liste ausgewählt werden, die dem Bediener in vokaler Form für jeden folgenden zu bedienenden Ort von einer zentralen Stelle oder einer gleichwertigen Anordnung zur Verwaltung der Bestellungen in dem Warenlager übermittelt wird, vorzugsweise während sich der Bediener zu Fuß von dem bereits bedienten Ort zum folgenden zu bedienenden Ort begibt.

7. Verfahren gemäß irgendeinem der vorstehenden Ansprüche, **dadurch gekennzeichnet, dass** die Fahrbefehle einen Startbefehl der Transporteinrichtung zu einer Fortbewegung um eine bestimmte Anzahl an Grundschritten umfassen, die der Distanz entspricht, die einen bereits bedienten Ort (1) von einem folgenden zu bedienenden Ort (4) trennt, ebenfalls **dadurch gekennzeichnet, dass** der Bediener und Kommissionierer auch einen Richtungsbefehl bestimmt, den er der Transporteinrichtung beim Anlassen erteilt.

8. Verfahren nach irgendeinem der vorstehenden Ansprüche, **dadurch gekennzeichnet, dass** die Fahrbefehle die Bezeichnung der Adresse des folgenden zu bedienenden Ortes (4) umfassen.

9. Verfahren gemäß irgendeinem der vorstehenden Ansprüche, **dadurch gekennzeichnet, dass** in einem Warenlager, in dem verschiedene Transporteinrichtungen fahren, für die jeweils ein anderer Bediener zuständig ist, die Fortbewegungsgeschwindigkeit der Transporteinrichtungen von einem LagerOrt zu einem anderen so geregelt wird, dass sie zumindest der Geschwindigkeit eines zu Fuß gehenden Menschen entspricht.

10. Anlage zur Vorbereitung von Bestellungen in einem Warenlager, in dem die Artikel jeder in Vorbereitung befindlichen Bestellung von einem mit dieser Bestellung an den entsprechenden Plätzen des Warenlagers (1-4) beauftragten Bediener entnommen und in einem durch eine motorisierte Transporteinrichtung transportierten Behälter zusammengestellt werden, der ihm für deren Transport durch das Warenlager dient, und in der jeder Bediener und Kommissionierer über ein ihm zugehöriges tragbares Gerät mit Mikroprozessor (23) verfügt, welches in Verbindung mit einem drahtlosen Fernmeldenetz steht, **dadurch gekennzeichnet, dass** das tragbare Gerät (23) jedes Bedieners einem Servomechanismus (21) zugeordnet ist, der die dem Bediener zugewiesene Transporteinrichtung ausstattet und ihm bei der Abfahrt von jedem bedienten Ort ermöglicht, Fahrbefehle an seine Transporteinrichtung zu richten, die er zumindest zum Teil frei bestimmt und deren Sendung er durch das tragbare Gerät steuert, um sie mittels des drahtlosen Fernmeldenetzes an die Transporteinrichtung zu übertragen, um deren Fortbewegung bis zum folgenden zu bedienenden Ort zu steuern, wobei der Servomechanismus fähig ist, die empfangenen Befehle zu interpretieren, und dadurch, dass sie eine zentrale Stelle zur Verwaltung der Bestellungen (26), die ebenfalls durch das drahtlose Nachrichtennetz (24) funktional mit den tragbaren Geräten (23) verbunden ist, sowie eine Vorrichtung zur Sprachsynthese und -erkennung zum Empfang von Informationen zur Bestellliste in verbaler Form für jeden Bediener für jeden zu bedienenden Ort und/oder zur Sendung der Fahrbefehle in verbaler Form umfasst.

11. Anlage nach Anspruch 10, **dadurch gekennzeichnet, dass** jedes tragbare Bediengerät unter einem Schutzgriff, den der Bediener in die hohle Handfläche legt, zwei symmetrische Steuerhebel umfasst, die mit den Fingern zu betätigen sind, indem die Hand darüber geschlossen wird, um jeden Steuerhebel gegen eine Rückstellfeder zu drücken; den einen, um einen Startbefehl zu geben, der das Anlassen bzw. den Halt der Transporteinrichtung steuert, den anderen, um einen Halt durch Bremsen und/oder Sperren der Steuerungen bei inaktiver Stellung zu bestimmen, wobei der Schutzgriff selbst als Knopf zur Fernbetätigung der Richtung dient und derart drehbar auf dem Gehäuse des Gerätes montiert ist, dass seine Drehung nach rechts oder links einen entsprechenden Richtungswechsel der Transporteinrichtung steuert.

12. Anlage nach Anspruch 11, **dadurch gekennzeichnet, dass** der Schutzgriff den Betätigungsknopf für die Richtung bildet und dadurch, dass er die Auslösung eines Verfahrens zur Notbremsung in eine Sperrstellung der Steuerungen bestimmt, bei der er in das Gehäuse gedrückt wird.

13. Anlage gemäß Anspruch 10, 11 oder 12, **dadurch gekennzeichnet, dass** für jede Transporteinrichtung (8) ein Zählwerk für Grundschritte der Fortbewegung (29), wie z. B. ein Kodierrad oder eine Vorrichtung mit gleichwertigem Zeitverhalten vorgesehen ist, wobei das Zählwerk der Steuerung des tragbaren Gerätes des entsprechenden Bedieners unterworfen ist.

## Claims

1. Method for preparation of orders constituted by articles to be collected from storage locations in a depot by an order-preparation operator who assembles the orders in a container driven by a motorised handling vehicle (8) which is used to transport the orders between successive locations served, **characterised in that** the articles to be assembled which constitute an order being prepared are selected by the said operator according to a predetermined list which is transmitted in vocal form, to the operator, for each subsequent location to be served, from a central order control unit in the depot, and **in that** the displacements of the handling vehicle (1, 4) are controlled by routing instructions which are at least partly freely determined by the order-preparation operator (6), which are emitted by a portable device which is specific to the said operator, and which are transmitted to the handling vehicle (8) by means of a wireless telecommunications network whilst the operator is going on foot from each location already served to the following location to be served.

2. Method according to claim 1, **characterised in that** the transmission in vocal form of the list of articles to the operator takes place during the displacement of the handling vehicle from the location already served to the following location to be served.

3. Method according to claim 1 or claim 2, **characterised in that** the routing instructions are emitted by the operator (6) in vocal form, and are transmitted transformed into digital control signals in order to be received and interpreted by the handling vehicle (8), the transmission advantageously taking place by wireless means or by infrared radiation.

4. Method for preparation of orders constituted by articles to be collected from storage locations in a depot by an order-preparation operator who assembles the orders in a container driven by a motorised handling vehicle (8) which is used to transport the orders between successive locations served, **characterised in that** the displacements of the handling vehicle (1, 4) are controlled by routing instructions which are at least partly freely determined by the order-preparation operator (6), which are emitted by the said operator in vocal form, and which are transformed into digital control signals in order to be received and interpreted by the handling vehicle (8), and are transmitted from a device which is specific to the said operator to the handling vehicle (8) by means of a wireless telecommunications network whilst the operator is going on foot from each location already served to the following location to be served.

5. Method according to claim 4, **characterised in that** the routing instructions are emitted by the operator (6) in verbal form.

6. Method according to claim 5, **characterised in that** the said articles to be assembled which constitute an order being prepared are selected by the said operator according to a predetermined list, which is transmitted in vocal form to the operator, for each subsequent location to be served, from a central unit or an equivalent assembly for control of orders in the depot, preferably whilst the operating is going on foot from the location already served to the following location to be served.

7. Method according to any one of the preceding claims, **characterised in that** the said routing instructions comprise a vehicle starting order for displacement consisting of a predetermined number of elementary steps, corresponding to the distance which separates a location already served (1) from a subsequent location to be served (4), characterised also **in that** the order-preparation operator also determines a steering order to be imparted to the said vehicle when starting takes place.

8. Method according to any one of the preceding claims, **characterised in that** the said routing instructions comprise designation of the address of the following location to be served (4).

9. Method according to any one of the preceding claims, **characterised in that** in a depot in which different handling vehicles are moving, each of which is controlled by a different operator, the speed of displacement of the said vehicles from one storage location to another is regulated such as to be at least equal to that of a man going on foot.

10. Installation for preparation of orders in a depot where the articles for each order being prepared are collected by an operator who is in charge of the said order in respective locations in the depot (1-4), and are gathered together in a container which is driven by a motorised handling vehicle which is used to transport the orders through the depot, and wherein each order-preparation operator has a portable microprocessor device (23) which is specific to him and is connected to a wireless telecommunications network, **characterised in that** each operator's portable device (23) is associated with a servo-mechanism (21) with which the handling vehicle allocated to the said operator is equipped, thus, at the starting point for each location served, allowing the operator to give his vehicle routing instructions which he determines at least partly freely, and the emission of which he controls by means of the said portable device, in order to transmit the instructions by means of the said wireless telecommunications network to the said vehicle in order to control the displacement of the latter to the following location to be served, the said servo-mechanism being able to interpret the said orders which it receives, and **in that** the installation comprises a central order control unit (26) which is also connected functionally to the portable devices (23) by the said wireless communications network (24), as well as a device for vocal synthesis and recognition, for receipt in verbal form by each operator of control list information for each location to be served and/or emission in verbal form of the said routing instructions.

11. Installation according to claim 10, **characterised in that**, in a protective handle which the operator holds in the hollow of his palm, each portable operator device comprises two symmetrical levers to be activated by the fingers, by closing the hand onto them, in order to thrust each lever against a return spring, i.e. one lever to launch a starting order which leads to control of the starting or stopping of the vehicle, and the other lever to give rise to stopping by the effect of braking and/or locking of the commands in an inactive position, the handle itself acting as a remote orientation manoeuvring knob, the said handle being fitted such as to rotate on the housing of the device such that its rotation to the right or to the left gives rise to a corresponding change in orientation of the vehicle.

12. Installation according to claim 11, **characterised in that** the said handle constitutes the orientation manoeuvring knob and **in that** it gives rise to triggering of an emergency stop procedure in a position of locking of the commands, wherein it is pushed into the said housing.

13. Installation according to claims 10, 11 or 12, **characterised in that** each handling vehicle (8) is provided with a device for counting of elementary displacement steps (29), such as a coding wheel or an equivalent timing device, the said counting device being placed under the control of the portable device of the corresponding operator.
